# EUROPEAN PATENT SPECIFICATION

(11) **EP 0 489 753 B1**
(45) Date of publication and mention of the grant of the patent: **10.05.1995**
(21) Application number: 90911714.5
(22) Date of filing: 02.08.1990
(51) Int. Cl.: B65G 59/06, G07F 11/16, G07F 11/24

(54) **Automatic dispenser**
Automatische Ausgabevorrichtung
Dispositiv distributeur automatique

(30) Priority: 20.06.1990 ES 9001712
(43) Date of publication of application: 17.06.1992
(73) Proprietor: ASSEMBLER, S.L., E-03003 Alicante (ES)
(72) Inventor: GARCIA ROVIRA, José, Ramón, E-03003 Alicante (ES); CHACON SEVILA, Rafael, Ignacio, E-03003 Alicante (ES)
(74) Representative: Urizar Anasagasti, José Antonio
(86) International application number: PCT/ES90/00027
(87) International publication number: WO 91/19660

(56) References cited:
- DE-C- 658 581
- FR-A- 2 149 596
- US-A- 2 821 329
- US-A- 3 970 216

## Description

The present invention relates to a dispenser device for products to be sold automatically, said device consisting of a compartment placed at the bottom of a vertical loader in which piled products are situated, said products expelled one by one from the bottom of the pile as a result of an electromechanical action derived from the machine.

At present, many products, packaged or bottled, are distributed and disposed to the consumer by way of appreciably standard measures. As a characteristical example, dispensers for cigarettes or drinks can be mentioned. In such machines, the products are introduced and piled up in vertical loaders consisting of a base-plate at the bottom which prevents the discharge of the products from the lower zone.

The activating function of traditional dispensers is carried out by way of a pushing rod which displaces the product situated on the bottom towards one side supplied by a window, while the rest of the elements of the pile stay inside the loader. Another alternative solution is to make use of a lever which after a revolving action engages a lateral side of the lower package, removing it towards one side. Both mechanisms occupy a considerable space which thus increases the size of the machine. Dispensers of said type are described in US-A-3 970 216, US-A-2 821 329, FR-A-2 149 596, or DE-C-658 581, on which the preamble of claim 1 is based.

In both known embodiments, the lower product is displaced at the bottom while it is trapped between the base of the dispenser and the weight of the pile of products. In some cases the weight of the column, and in others, the fact that many packaged products are usually wrapped in an exterior cover, a certain light sticking between the products occurs. As a result of that, the known dispenser devices have to take care of said problem, bearing in mind that due to the fragility of the package, fractures or ruptures in the package are produced.

As a consequence, the object of the invention is not only to provide a dispenser which easily delivers the products, but also to do this in such a way that it separates the lowest product easily from the pile and that it is dispensed by gravity without any barriers. Moreover, the purpose is also to avoid unnecessary spaces inside the machine due to the fact that if the product is not forced to be dispensed at one lateral side or towards the front of the dispenser, this surface can be occupied by other elements, reducing therefore the space and the size of the dispenser.

This object is achieved by providing a dispenser which is characterised by the features indicated in claim 1.

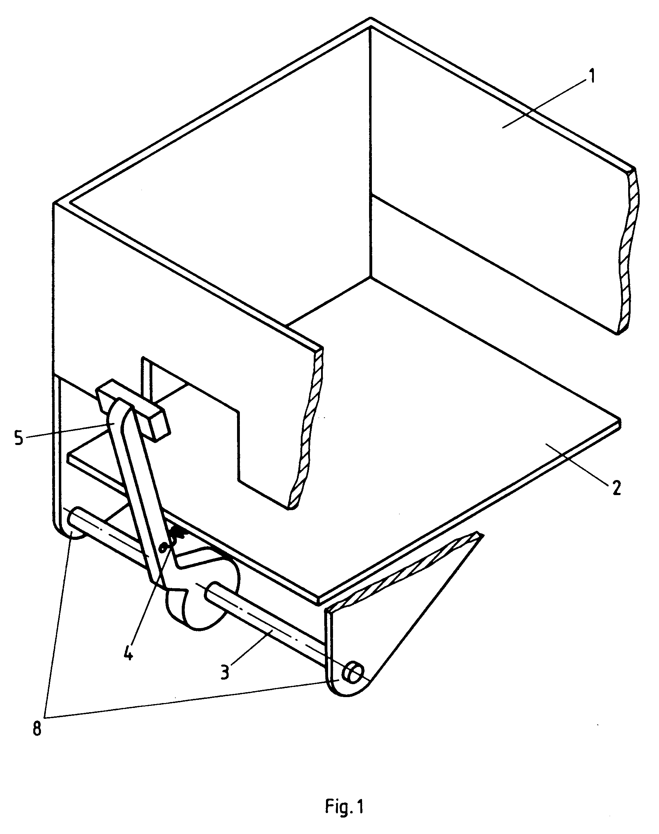

A preferred embodiment of the subject-matter of the invention is described with reference to the accompanying drawings, in which
Figure 1 shows a perspective view of the dispenser,
Figure 2 shows a side view of the device at the moment in which the expulsion of one of the products is taking place,
Figure 3 shows a front view of an embodiment of the driving mechanism for the dispenser, and
Figure 4 shows some possible configurations which the base-plate can adopt, together with the element of retention according to the shape of the product to be delivered.

As it can be observed from the figures, the dispenser consists of a compartment (1), situated at the base of a vertical loader which contains a variable number of piled up products inside. The compartment secured on the machine, presents in its lower part a base-plate (2), normally perpendicular with respect to it, bearing the column of products contained in the loader. Said base plate (2) can pivot downwardly, revolving around an axis (3), so that through each pivot action, the lowest product of the pile of products expelled downwardly. Moverover, it has a spring (4) incorporated on its lower face near the side from which the products are expelled.

In order to expel the corresponding product towards the lower zone, this device also incorporates a retaining element (5) which engages the second lower product of the pile. This retaining element is positioned above the axis (3) and is joined to the opposite extreme of the spring (4) which is connected to the base-plate (2), imposing pressure on the second product through a window in the compartment and in an inward direction. The coupling between the retaining element and the axis provides a limiting top point so that when the base-plate is horizontally positioned, the retaining element (5) stands vertically and the pile of the products rests, therefore, on the base-plate. As the base-plate (2) pivots the retaining element (5) pivots inside the compartment (1). Its length is calculated such that it engages the second product (6) of the pile, so that it retains all the products of the pile, except the lowest one (7) which is dispensed through the pivoting action of the base-plate (2) towards the front side and in the downward direction of the dispenser.

The axis (3) is mounted in a pair of holes (8) situated on each side of the compartment (1) under the base-plate (2) and near the side opposite to the one through which the expulsion of the product is carried out, in such manner that when the tilting movement of the plate (2) takes place, the lower product is easily released from the rest of the pile and is dispensed in downward direction, although with a certain inclination.

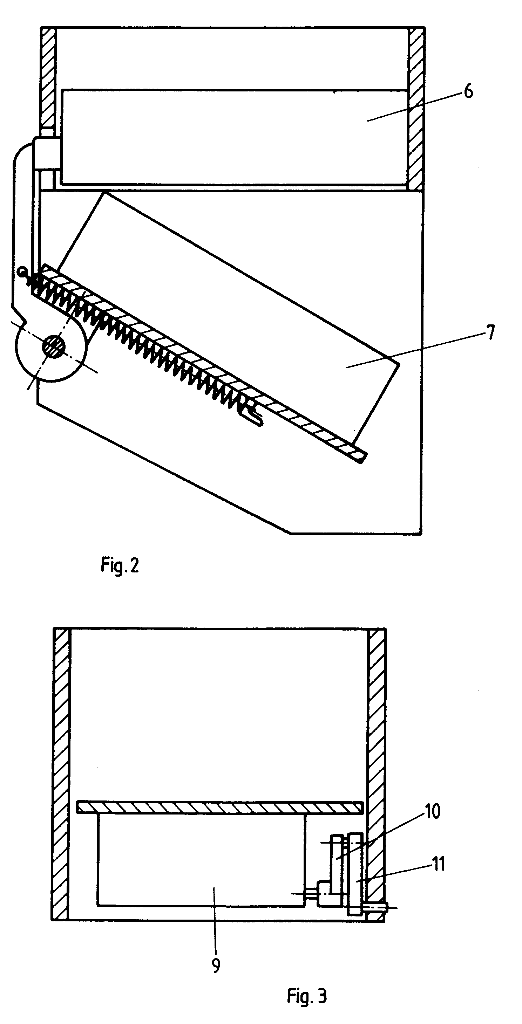

The functioning of this device, basically consists of transmitting a rotary movement to the axis (3), said rotary movement being created by an element which can activate any one of the multiple dispenser chutes which can be provided in the dipenser, or preferably by the mechanism represented in figure 3.

In this figure, a small activating motor (9) can is provided which is mounted on the lower face of the base-plate (2) which supports the products. On the shaft of the motor a set of arms (10) and (11) is provided. The opposite extreme ends of the set of arms is joined to the body of the compartment (1). One complete revolution of this motor, starting from a horizontal initial position of the plate, produces a downward pivoting movement of the plate and its return to its original position. Hence, controling the movement or the degree of the pivoting angle of the motor, the action of expulsion of one of the products can be easily obtained.

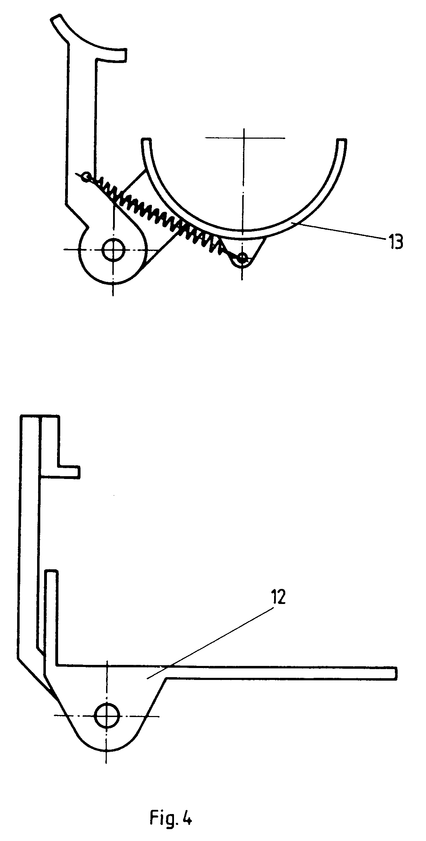

As it can be observed from figures 4 the base-plate and the retaining element can adopt various configurations according to the shape of the product to be delivered.

In the mentioned figure, some examples are indicated such as for delivery of cigarette boxes (12), cans of drinks (13), or spherical products of the type of balls in packages of one or various units.

## Claims

1. An automatic dispenser comprising a vertically disposed compartment (1), which contains a pile of products, a base-plate supporting said pile of products, said base plate being mounted on a rotating axis (3) which carries a retaining element (5), which upon a pivoting action of the base plate from a pile supporting position to a product discharge position engages the penultimate product of the pile to retain the pile while the lowest product is discharged by the pivoting action of said base plate, characterised in that the pivoting movement of the base-plate around said rotating axis (3) which is located beneath the base plate, and at that side opposite to the one from which the products are discharged, is obtained by a motor (9) which is installed at the lower surface of said base plate, the motor shaft carrying a double arm set (10, 11) which at its opposite end is joined to the compartment, such that one complete revolution of of said motor shaft starting from a horizontal supporting position of the base-plate, produces a downward pivoting movement of the base plate and its return to the supporting position.

2. Device, according to claim 1 characterised in that by controlling the angular displacement of the base-plate, a complete cycle of discharge of the product and return to the horizontal position of the base-plate is achieved, said degree of angular displacement being variable.

3. Device according to the previous claims, characterised in that the base-plate and the retaining element can adopt different configurations according to the shape of the product to be dispensed.

## Patentansprüche

1. Eine automatische Ausgabevorrichtung, bestehend aus einem vertikal angebrachten Fach (1), das einen Stapel Produkte enthält, sowie einer Grundplatte, die den vorgenannten Stapel trägt; die Grundplatte is auf einer sich drehenden Achse (3) befestigt, die ihrerseits ein Rückhalteelement (5) trägt, das aufgrund der Drehbewegung der Grundplatte aus der Position, in der der Stapel getragen wird, in die Position, in der das Produkt entladen wird, wechselt, dann das jeweils vorletzte Produkt des Stapels umgreift, und den Stapel zurückhält, während das zuunterst liegende Produkt durch die Drehbewegung der genannten Grundplatte entladen wird; dieser Vorgang ist dadurch gekennzeichnet, daß die Drehbewegung der Grundplatte um die genannte rotierende Achse (3), die neben der Grundplatte auf der Seite, die derjenigen gegenüber liegt, von der die Produkte entladen werden, angrebracht ist, durch einen Motor (9) bewirkt wird, der auf der Unterseite der genannten Grundplatte angebracht ist, wobei der Motorschaft eine Doppelarm-Vorrichtung (10, 11) trägt, die am gegenüberliegenden Extrem mit dem Produkt-Fach verbunden ist, sodaß durch eine komplette Umdrehung des genannten Motorschafts, beginnend in der horizontalen, die Produkte tragenden Position der Grundplatte, eine Dreh- und Abwärtsbewegung der Grundplatte und deren Rückkehr zur tragenden Position bewirkt wird.

2. Eine Vorrichtung, gemäß Anspruch 1, die dadurch gekennzeichnet ist, daß durch die winkelförmige Verlagerung der Grundplatte, ein kompletter Entladungszyklus des Produkts und die Rückkehr der Grundplatte zur horizontalen Position erreicht wird, wobei der Grad dieser winkelförmigen Verlagerung variabel ist.

3. Eine Vorrichtung gemäß der obigen Ansprüche, die dadurch gekennzeichnet ist, daß die Grundplatte und das Rückhalteelement gemäß der Form des zu entladenden Produkts verschiedene Konfigurationen annehmen können.

## Revendications

1. Un distributeur automatique comprenant un cassetin (1) disposé verticalement qui comprend una pile de produits, une plaque de base qui supporte ladite pile de produits, la dite plaque de base montée sur un axe de pivotement (3), lequel comporte un élément d'arrêt (5) qui, par une action pivotante de la plaque de base, dès la position supportante jusqu'à la position de décharge s'accroche le penultième produit de la pile pour détenir celle-ci. Pendant que le produit inférior est déchargé par l'action pivotante de ladite plaque de base, caractérisé en ce que le mouvement pivotant de la plaque de base autour du dit axe de pivotement (3), lequel est situé par dessous de la plaque de base, et à l'autre côté opposé de celui-là où les produits sont déchargés par moyen d'un moteur (9), que est placé sur la surface inférieur de ladite plaque de base, l'arbre du moteur comportant un jeu de double bras (10, 11) lequel est relié au cassetin, par son extrémité opposé, de telle facon qu'un complet tour du dite arbre du moteur, en partant d'une position supportante de la plaque de base, apport un mouvement basculant vers le bas de la plaque de base et son retour à la position de support.

2. Dispositif selon la revendication 1, caractérisé en ce que contrôlant le déplacement angulaire de la plaque de base, on a obtenue un cycle complet de décharge du produit et le retour à la position horizontale de la plaque de base, ladite déplacement angulaire est variable.

3. Dispositif selon les revendications précédentes, caractérisé en ce que la plaque de base et l'élément d'arrêt peuvent prendre des differéntes configurations adaptées a la forme du contour du produit à distribuer.
